# EUROPEAN PATENT APPLICATION

(11) **EP 0 585 047 A2**
(43) Date of publication of application: **02.03.1994**
(21) Application number: 93306530.2
(22) Date of filing: 18.08.1993
(51) Int. Cl.: B01D 53/36, B01D 53/32, B01J 19/12, B01J 19/08, F01N 3/28

(54) **The purification of internal combustion engine exhaust emissions**

(30) Priority: 27.08.1992 GB 9218207
(71) Applicant: UNITED KINGDOM ATOMIC ENERGY AUTHORITY, Didcot, Oxfordshire OX11 0RA (GB)
(72) Inventor: Davies, Michael John, Wallingford, Oxfordshire (GB); Carlow, John Sydney, Southampton SO2 3GE (GB); Jorgensen, Norman, Nr. Reading, Berkshire (GB); Raybone, David, Stow on the Wold, Gloucester (GB)
(74) Representative: Wood, Paul Austin

(57) **Abstract**

A method and apparatus for enhancing the catalytic reduction of exhaust gas pollutants during the warm-up phase of a cycle of use of an internal combustion engine, in which a plasma discharge is initiated in the exhaust gas upstream of a catalytic converter which forms part of an exhaust system.

## Description

The present invention related to the purification of the exhaust emissions from internal combustion engine exhausts.

Increasingly, international concerns about the environment are causing Governments to introduce legislation to control and, where possible, reduce the emission of pollutants arising from the combustion processes in internal combustion engines. Pollutants of concern include nitrogen oxides, unburnt hydrocarbons and carbon particles.

The use of catalysts to reduce significantly the emission of undesirable components of exhaust gases is well known and they are in widespread use.

However, in general, the catalysts used at present are effective only at temperatures greater than about 350°C. The combustion processes in an internal combustion engine also are least efficient before the engine has reached its normal operating temperature. Thus, at the time when the emission of pollutants is at its highest, the efficiency of the catalysts are at their lowest.

It is an object of the present invention to provide a method of and apparatus for improving the efficiency of catalytic systems for purifying internal combustion engine exhaust emissions in the early part of the operating cycle of such engines.

According to the invention there is provided a method of purifying the exhaust emissions from internal combustion engines, including the operation of passing the exhaust emissions through a convertor including a medium adapted to catalyse the conversion of pollutants included in the exhaust emissions into less noxious substances, wherein there is included the operation of subjecting the exhaust emissions to a low-temperature electrical discharge prior to passing the exhaust emissions through the convertor at least during an initial phase of the operation of an internal combustion engine with which the converter is associated.

Also according to the invention there is provided a catalyst activity enhancer for use with an exhaust system for an internal combustion engine incorporating a converter including a medium adapted to catalyse the conversion of pollutants included in the exhaust emissions from the internal combustion engine into less noxious substances, comprising means whereby an electrical discharge can be established in the said exhaust emissions prior to their entry into the converter.

The means whereby an electrical discharge can be established in the exhaust emissions may comprise a system of electrodes or, a microwave injector, or an antenna. A suitable form of electrical discharge is a low temperature plasma.

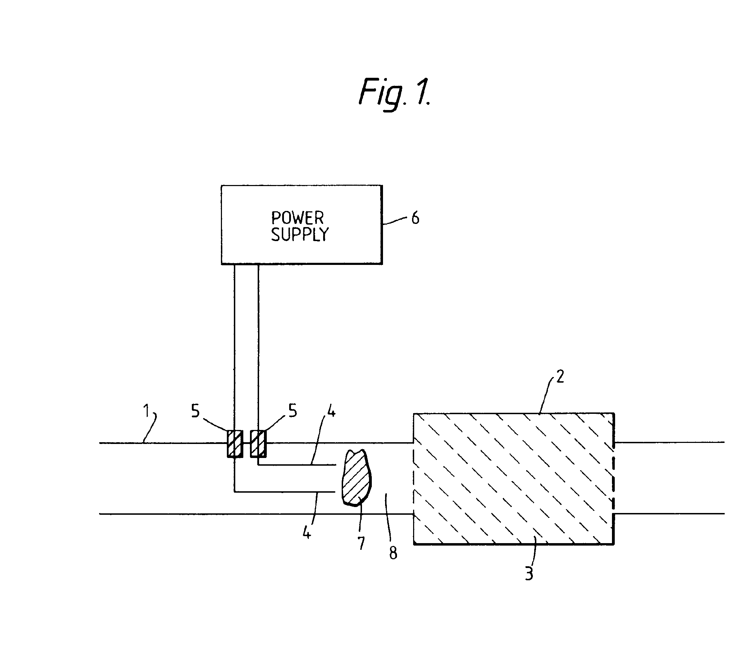

The invention will now be described, by way of example, with reference to the accompanying drawings in which Figure 1 is a schematic representation of an embodiment of the invention.
Figure 2 is a schematic representation of a second embodiment of the invention, and
Figure 3 is a schematic representation of another embodiment of the invention.

Referring to Figure 1 of the drawings, there is shown a portion of an internal combustion engine exhaust system 1 including a section 2 which is a conventional catalytic converter including a catalytic material 3. Upstream of the catalytic converter 2 is a pair of electrodes 4 which are isolated from the exhaust system 1 by means of ceramic feed-throughs 5. The electrodes 4 are connected to a high voltage power supply 6 the output voltage from which is sufficient to create a plasma 7 in exhaust gases 8 flowing through the exhaust system 1.

As already mentioned, normally the catalyst 3 is at its least efficient at the very stage in the operating cycle of the internal combustion engine (not shown in the drawing) when the level of pollutants in the exhaust gases 8 is at its highest. The ionised species, electrons and free radicals in the exhaust gases 8 created by the plasma are very reactive and this compensates for the low level of activity of the catalyst 3.

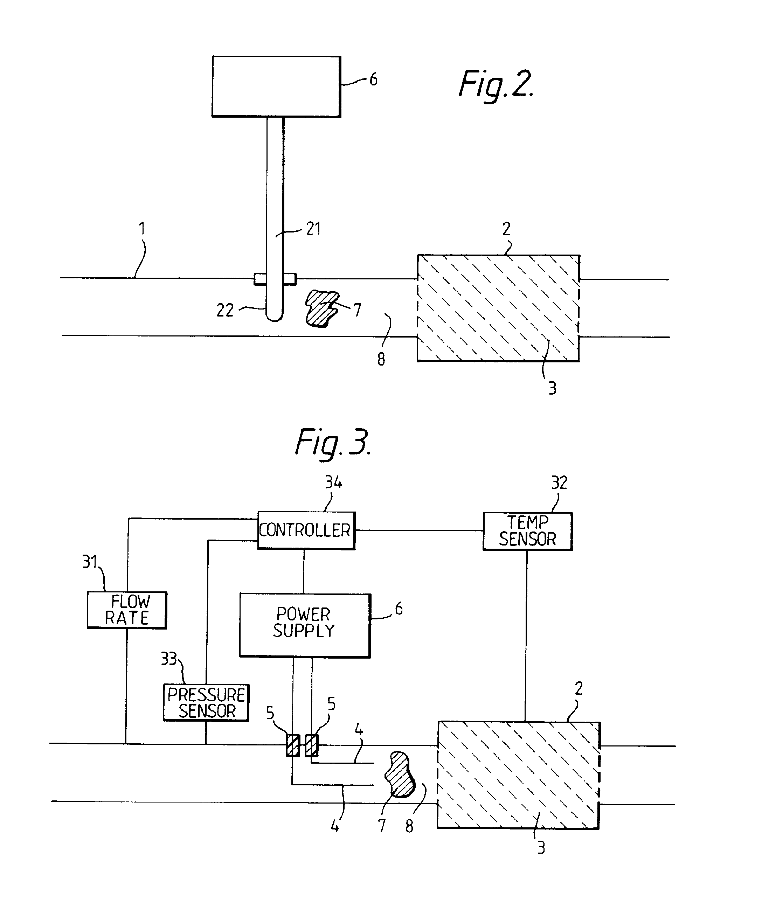

Figure 2 shows a second embodiment in which the electrodes 4 are replaced by an antenna 21 to which power is supplied via a waveguide 22. The remainder of the system is unchanged and therefore the same reference numerals are used as for the embodiment of Figure 1.

In a more sophisticated system, which is illustrated in Figure 3, parameters of the exhaust gases 8, such as flow rate, temperature and pressure are monitored by sensors 31, 32 and 33, respectively and the operation of the power supply is varied ny means of a controller 34 to ensure that the plasma 7 is maintained until the catalyst 3 is at an efficient working temperature. Again, those components of the system which are the same as for the Figure 1 embodiment bear the same reference numerals.

## Claims

1. A method of purifying the exhaust emissions from internal combustion engines, including the operation of passing the exhaust emissions through a convertor including a medium adapted to catalyse the conversion of pollutants included in the exhaust emissions into less noxious substances, wherein there is included the operation of subjecting the exhaust emissions to a low-temperature electrical discharge prior to passing the exhaust emissions through the convertor at least during an initial phase of the operation of an internal combustion engine with which the converter is associated.

2. A method according to Claim 1 wherein there is included the operations of monitoring the pressure and flow rate of the exhaust emissions from the internal combustion engine and the temperature of the medium adapted to catalyse the conversion of pollutants included in the exhaust emissions into less noxious substances, varying the operation of a power supply so as to maintain the electrical discharge in response to signals indicative of the pressure and flow rate of the exhaust emissions until the catalytic medium reaches a predetermined value.

3. A method according to Claim 1 or Claim 2 wherein the electrical discharge is a low temperature plasma.

4. A catalyst activity enhancer for use with an exhaust system for use with an internal combustion engine incorporating a converter including a medium adapted to catalyse the conversion of pollutants included in the exhaust emissions from the internal combustion engine into less noxious substances, comprising means whereby an electrical discharge can be established in the said exhaust emissions prior to their entry into the converter.

5. A catalytic activity enhancer according to Claim 4 wherein there is included means for measuring the flow rate of the said exhaust emissions and generating signals related thereto, means for measuring the pressure of the said exhaustemis- sions and generating signals related thereto, means for measuring the temperature of the catalytic medium and generating signals relating thereto and a controller responsive to the said signal to vary the action of a power supply adapted to provide the power to maintain the electrical discharge in the said exhaust emissions in such a manner as to maintain the electrical discharge until the catalytic medium reaches a predetermined temperature.

6. A catalytic activity enhancer according to Claim 4 or Claim 5 wherein the means for establishing an electrical discharge in the exhaust emissions a system of electrodes.

7. Acatalytic activity enhancer according to Claim 4 or Claim 5 wherein the means for establishing an electrical discharge in the exhaust emissions comprises means for establishing a microwave electromagnetic field in the exhaust emissions thereby to create a plasma in the exhaust emissions.

8. A catalytic activity enhancer according to Claim 7 wherein the means for establishing a microwave electromagnetic field in the exhaust emissions comprises an antenna.

9. A method of purifying the exhaust emissions from an internal combustion engine substantially as hereinbefore described and with reference to the accompanying drawings.

10. A catalytic activity enhancer for use in purifying the exhaust emissions from internal combustion engines substantially as hereinbefore described and with reference to the accompanying drawings.
